(19) Europäisches Patentamt
European Patent Office
Office européen des brevets

(11) **EP 1 684 520 A2**

(12) **EUROPEAN PATENT APPLICATION**

(43) Date of publication:
26.07.2006 Bulletin 2006/30

(51) Int Cl.:
*H04N 7/26* (2006.01)

(21) Application number: **05019462.0**

(22) Date of filing: **07.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **24.01.2005 JP 2005015629**

(71) Applicant: **KABUSHIKI KAISHA TOSHIBA**
**Tokyo 105-8001 (JP)**

(72) Inventors:
• **Hasebe, Mitsutake**
**c/o Intell. Property Division**
**Minato-ku,**
**Tokyo 105-8001 (JP)**

• **Irie, Bunpei**
**c/o Intellectual Property Division**
**Minato-ku,**
**Tokyo 105-8001 (JP)**
• **Akagi, Takuma**
**c/o Intellectual Property Division**
**Minato-ku,**
**Tokyo 105-8001 (JP)**
• **Sato, Toshio**
**c/o Intellectual Property Division**
**Minato-ku,**
**Tokyo 105-8001 (JP)**
• **Sukegawa, Hiroshi**
**c/o Intellectual Prop. Divisioni**
**Minato-ku,**
**Tokyo 105-8001 (JP)**

(74) Representative: **Kramer - Barske - Schmidtchen**
**Radeckestrasse 43**
**81245 München (DE)**

(54) **Image compression method and image compression device**

(57) In an image compression device (100), an image input section (101) performs image input processing to input an image having characteristics which are recognition objects, a conversion processing section (102) performs conversion processing to convert a pixel value of each pixel forming the image into a pixel value suitable for coding while retaining the characteristics which are the recognition objects in the image input by the image input processing, and a coding section (103) performs coding processing as compression processing with respect to the image constituted of each pixel converted by the conversion processing.

100

F I G. 1

EP 1 684 520 A2

**Description**

The present invention relates to an image compression method and an image compression device which compress an image having characteristics which are recognition objects in a character recognition device, a face collation device or the like.

For example, in a mail handling device which performs sorting based on a recognition result of characters described on the mail, there is a restriction on a handling time for handling each mail. Therefore, in the mail handling device, a time is preferably short for transmitting an image of the mail retaining a resolution required for character recognition. In a face collation device, an image including a collated face image is stored as a log in many cases. In this face collation device, a time is preferably short for extracting the image stored as the log.

Conventional technologies on image compression are disclosed in Jpn. Pat. Appln. KOKAI Publication Nos. 9-116765 and 2000-156861.

In Jpn. Pat. Appln. KOKAI Publication No. 9-116765, an image coding method is disclosed in which a difference value between adjacent pixels is calculated, and a variable-length code is allocated depending on an appearance frequency in coding of static image data by a reversible system.

Moreover, in Jpn. Pat. Appln. KOKAI Publication No. 2000-156861, a method of compressing multi-valued information is disclosed in which there are calculated positive or negative binary information of a difference value between pieces of luminance information of the adjacent pixels and an absolute value, and a bitmap is developed every pixel to perform the coding.

However, in the technologies disclosed in Jpn. Pat. Appln. KOKAI Publication Nos. 9-116765 and 2000-156861, there is a problem that a compression ratio is limited because the image compression is reversible. In the technologies disclosed in Jpn. Pat. Appln. KOKAI Publication Nos. 9-116765 and 2000-156861, there is a problem that characteristics as recognition objects might be lost in an image subjected to general irreversible compression such as so-called JPEG.

According to one aspect of the present invention, an object is to provide an image compression method and an image compression device capable of raising a compression efficiency of an image while maintaining characteristics as recognition objects in the image.

According to one aspect of the present invention, there is provided a method of compressing an image, comprising: performing image input processing to input the image having characteristics which are recognition objects; performing conversion processing to convert a pixel value of each pixel forming the image while retaining the characteristics which are the recognition objects in the image input by the image input processing; and performing coding processing with respect to the image converted by the conversion processing.

According to another aspect of the present invention, there is provided an image compression device comprising: an image input section which inputs an image having characteristics which are recognition objects; a conversion processing section which converts a pixel value of each pixel forming the image while retaining the characteristics which are the recognition objects in the image input by the image input section; and a coding processing section which performs coding processing with respect to the image converted by the conversion processing section.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a block diagram schematically showing a constitution example of an image compression device according to a first embodiment;
FIG. 2 is an explanatory view of processing contents of a smoothing processing section;
FIG. 3 is an explanatory view of processing contents of the smoothing processing section;
FIG. 4 is a flowchart showing a processing procedure of the smoothing processing section;
FIG. 5 is a block diagram schematically showing a constitution example of the image compression device according to a second embodiment;
FIG. 6 is a flowchart showing a processing procedure of a smoothing and difference processing section;
FIG. 7 is a block diagram schematically showing a constitution example of the image compression device according to a third embodiment;
FIG. 8 is a diagram showing an example of a distribution of luminance values of pixels and two maximum values in an image;
FIG. 9 is a diagram showing an example of the distribution of the luminance values of the respective pixels and two threshold values in the image;
FIG. 10 is a diagram showing gradation conversion processing by a gradation conversion processing section;
FIG. 11 is a block diagram schematically showing a constitution example of the image compression device according to a fourth embodiment;

FIG. 12 is a diagram showing an example of a histogram showing the distribution of the luminance values of the respective pixels in a face region;

FIG. 13 is a diagram showing an example of a histogram showing the distribution of the luminance values of the respective pixels in a whole image having the face region of the histogram shown in FIG. 12;

FIG. 14 is a block diagram schematically showing a constitution example of the image compression device according to a fifth embodiment;

FIG. 15A is a diagram showing an example of an image input by an image input section;

FIG. 15B is a diagram showing an example of an image input next to the image shown in FIG. 15A by the image input section;

FIG. 16A is a diagram showing an example of an image input by the image input section;

FIG. 16B is a diagram showing an example of an image input next to the image shown in FIG. 16A by the image input section; and

FIG. 17 is a flowchart showing a processing procedure of positioning processing.

First to fifth embodiments of the present invention will be described hereinafter with reference to the drawings.

First, a first embodiment will be described.

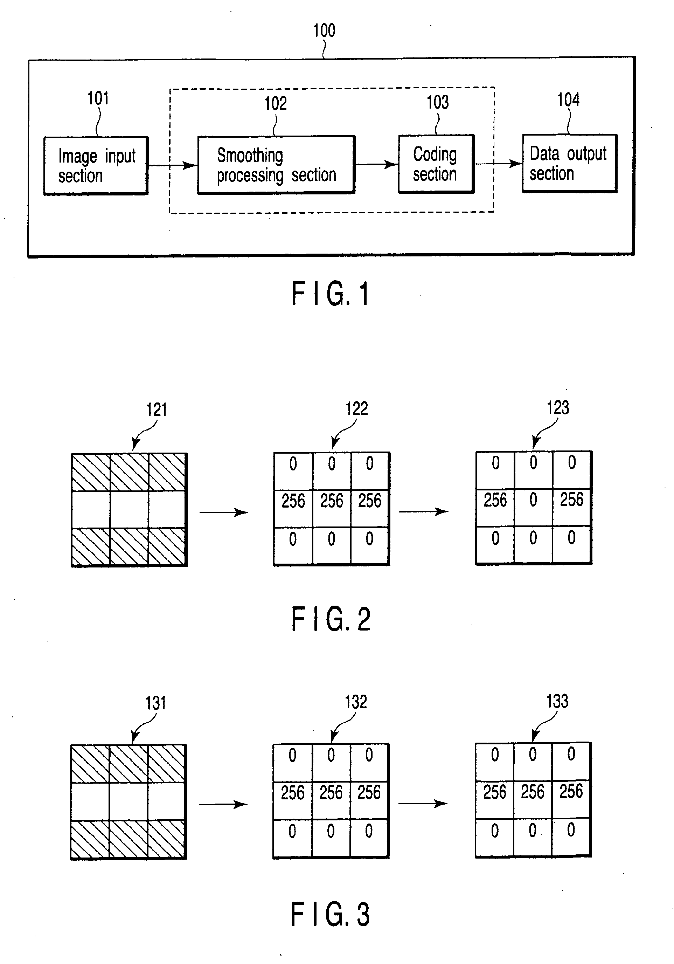

FIG. 1 schematically shows a constitution example of an image compression device 100 according to a first embodiment.

According to the first embodiment, as shown in FIG. 1, the image compression device 100 comprises an image input section 101, a smoothing processing section 102, a coding section 103, a data output section 104 and the like.

The image input section 101 comprises, for example, a digital camera, a television camera, an image scanner or the like. The image input section 101 may input a color image or a monochromatic image. The image input section 101 inputs an image including a recognition object. The image input section 101 supplies the input image to the smoothing processing section 102.

Moreover, it is assumed that the image input section 101 inputs digital image data in which a value (pixel value) of each pixel is represented by a digital value. For example, the image input section 101 inputs as the image the digital image data constituted of 640 pixels in a lateral direction (x-direction) and 480 pixels in a longitudinal direction (y-direction). Here, description will be given assuming that the image input section 101 inputs the image data in which the pixel value of each pixel is represented by a luminance value. It is to be noted that the image input section 101 may input the image data in which the value (pixel value) of each pixel is represented by a density value.

The smoothing processing section 102 performs smoothing processing with respect to the image. The smoothing processing section 102 performs the smoothing processing as conversion processing with respect to the image supplied from the image input section 101. That is, the smoothing processing section 102 functions as a conversion processing section which performs the conversion processing with respect to the image input as an object of compression processing by the image input section 101. The smoothing processing section 102 supplies the smoothed image to the coding section 103.

For example, the smoothing processing section 102 has a function of performing filtering processing as the smoothing processing with respect to the image by a median filter. That is, the smoothing processing section 102 has a function of subjecting the image supplied from the image input section 101 to the filtering processing as the smoothing processing by the median filter.

The coding section 103 performs variable-length coding processing as the compression processing with respect to the image. The coding section 103 subjects the image smoothed by the smoothing processing section 102 to the coding processing. The coding section 103 supplies the coded image to the data output section 104.

The coding section 103 performs the coding processing (Huffman coding processing), for example, based on Huffman coding theory. In this case, first the coding section 103 calculates an appearance frequency for each pixel value of each pixel forming the image (image data) smoothed by the smoothing processing section 102. On calculating the appearance frequency every pixel value, the coding section 103 allocates a code having a less bit number to the pixel value having a higher appearance frequency. Accordingly, in the coding section 103, it is possible to allocate a Huffman code to the pixel value of each pixel in the image data. As a result, the coding section 103 performs variable-length coding processing with respect to the image (image data) supplied from the smoothing processing section 102 based on the Huffman coding theory.

It is to be noted that the coding section 103 does not necessarily have to use the Huffman coding processing as the coding processing. For example, the coding section 103 may use run length coding processing or the like as the coding processing.

The data output section 104 outputs as a compressed image the coded image supplied from the coding section 103. For example, the data output section 104 outputs the compressed image to a recording device (not shown).

Next, the smoothing processing in the smoothing processing section 102 will be described.

FIGS. 2 and 3 are explanatory views of the smoothing processing in the smoothing processing section 102.

FIG. 2 is an explanatory view of the filtering processing by the median filter with respect to an image constituted of 3x3 pixels (three pixels in an x-direction, three pixels in a y-direction).

An image 121 shown in FIG. 2 shows an example of an image which is a processing object. In an image 122 shown in FIG. 2, each pixel of the image 121 is represented by a luminance value. An image 123 shown in FIG. 2 shows an image obtained by subjecting the image 122 to the filtering processing by the median filter. In the example shown in FIG. 2, the luminance values as the pixel values of the respective pixels of the image 122 are (256, 256, 256, 0, 0, 0, 0, 0, 0). Therefore, an intermediate value calculated by the median filter is "0". Therefore, in the filtering processing by the median filter with respect to the image 122, the image 123 is obtained in which the luminance value of a central pixel is converted into the intermediate value ("0").

On the other hand, FIG. 3 is an explanatory view of the smoothing processing by the smoothing processing section 102. An image 131 shown in FIG. 3 shows an example of the image which is the processing object similar to the image 121 shown in FIG. 2. In an image 132 shown in FIG. 3, each pixel of the image 131 is represented by a luminance value in the same manner as in the image 122 shown in FIG. 2. An image 133 shown in FIG. 3 shows an image as a processing result by the smoothing processing section 102 with respect to the image 132.

In the example shown in FIG. 3, the luminance value ("256") of the central pixel in the image 133 remains as that ("256") of the central pixel of the image 132. On the other hand, in the filtering processing by the median filter, the luminance value ("256") of the central pixel is converted into the intermediate value ("0") as in the image 123 shown in FIG. 2.

In the smoothing processing section 102, the smoothing processing is performed depending on a magnitude (difference value) of a difference between the intermediate value in the median filter and the luminance value of a noted pixel. That is, when the difference value between the intermediate value and the luminance value of the noted pixel is not less than a preset threshold value, the smoothing processing section 102 leaves the luminance value of the noted pixel after smoothed as that of the noted pixel before smoothed. When the difference value between the intermediate value and the luminance value of the noted pixel is less than a predetermined threshold value, the luminance value of the noted pixel after smoothed is converted into the intermediate value.

In other words, as shown in FIG. 2, the smoothing processing section 102 replaces the luminance value of the noted pixel after smoothed with the intermediate value in a case where the magnitude of the difference between the intermediate value and the luminance value of the noted pixel is less than the predetermined threshold value. On the other hand, as shown in FIG. 3, the smoothing processing section 102 leaves the luminance value of the noted pixel after smoothed as that of the noted pixel before smoothed in a case where the magnitude of the difference between the intermediate value and the luminance value of the noted pixel is not less than the preset threshold value.

Moreover, the following equation 1 represents the smoothing processing of the smoothing processing section 102 depending on the magnitude of the difference between the intermediate value and the luminance value of the noted pixel:

$$
\begin{aligned}
&\text{(Equation 1)}\\
&|\text{Median}(f(x+i,\ y+i)) - f(x,\ y)| \geq Th,\\
&f(x,\ y) = f(x,\ y);\ \text{and}\\
&|\text{Median}(f(x+i,\ y+i)) - f(x,\ y)| < Th,\\
&f(x,\ y) = \text{Median}(f(x+i,\ y+i)),
\end{aligned}
$$

wherein $f(x,y)$ denotes the luminance value of the noted pixel before smoothed, Median $(f(x+i, y+i))$ denotes the intermediaire value, and Th denotes the thresold value.

Next, a flow of the smoothing processing in the smoothing processing section 102 will be described.

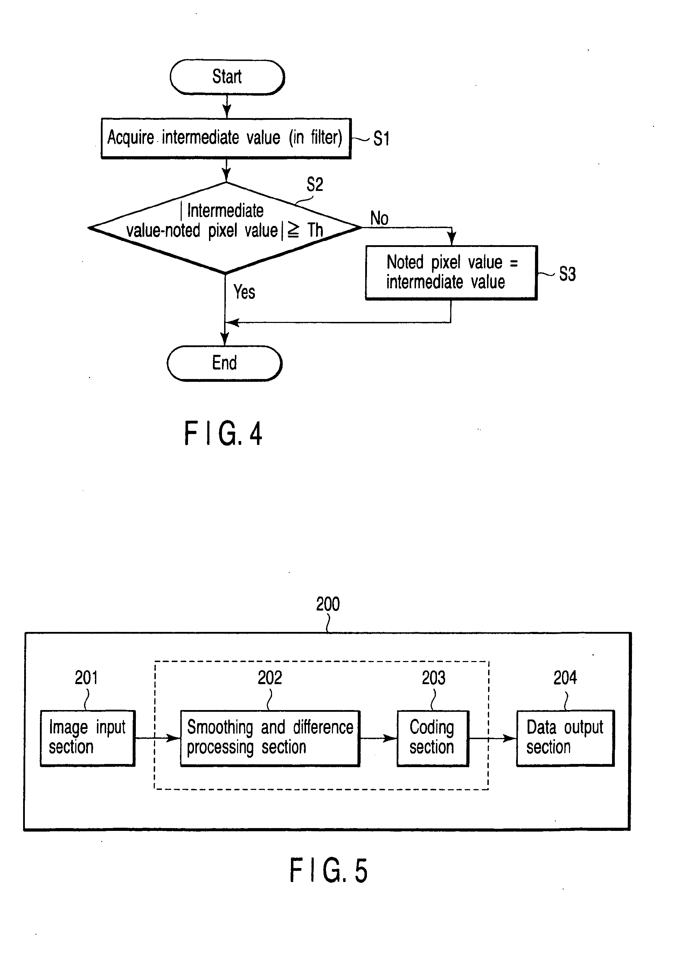

FIG. 4 is a flowchart showing a flow of the smoothing processing in the smoothing processing section 102.

In the smoothing processing section 102 to which the image has been supplied from the image input section 101, each pixel in the image is successively regarded as the noted pixel, and the median filter is applied to the pixel. When the median filter is applied to the noted pixel in the image, first the smoothing processing section 102 calculates the intermediate value in the median filter (step S1). For example, when the smoothing processing section 102 has the median filter with respect to 3x3 pixels, the section calculates the intermediate value with respect to the image constituted of 3x3 pixels.

On calculating the intermediate value, the smoothing processing section 102 calculates the magnitude (difference value) of the difference between the intermediate value and the luminance value of the noted pixel. On calculating the difference value between the intermediate value and the luminance value of the noted pixel, the smoothing processing section 102 judges whether or not the calculated difference value is not less than the preset threshold value (step S2).

When it is judged by this judgment that the difference value between the luminance value of the noted pixel and the intermediate value is not less than the preset threshold value (step S2, YES), the smoothing processing section 102 leaves the luminance value of the noted pixel after smoothed as that of the noted pixel before smoothed.

Moreover, when it is judged by the judgment that the difference value between the luminance value of the noted pixel and the intermediate value is less than the preset threshold value (step S2, NO), the smoothing processing section 102 replaces the luminance value of the noted pixel after smoothed with the intermediate value (step S3).

The smoothing processing section 102 regards as the noted pixels all of the pixels in the image supplied from the image input section 101 to perform the above-described processing. That is, the smoothing processing section 102 repeatedly executes the processing of the steps S1 to S3 to thereby regard all of the pixels in the image as the noted pixels and perform the smoothing processing. Accordingly, the smoothing processing section 102 subjects the whole image supplied from the image input section 101 to the smoothing processing.

In the above-described smoothing processing, it is possible to retain, for example, image information in which the luminance value rapidly changes in the image. Therefore, even in a case where the image information in which the luminance value rapidly changes are characteristics which are recognition objects, the smoothing processing section 102 can perform the smoothing processing suitable for the compression while retaining the characteristics which are the recognition objects with respect to the image of the compression object.

As described above, in the image compression device of the first embodiment, the image of the compression object is subjected to such smoothing processing as to leave the luminance value of the noted pixel after smoothed as that of the noted pixel before smoothed in a case where the difference value between the intermediate luminance value and the luminance value of the noted pixel is not less than the predetermined threshold value, and to set the luminance value of the noted pixel after smoothed to the intermediate value in a case where the difference value between the intermediate luminance value and the luminance value of the noted pixel is less than the predetermined threshold value.

Consequently, in the image compression device and method of the first embodiment, the smoothing processing suitable for the compression can be performed with respect to the image which is the compression processing object while retaining the characteristics which are such recognition objects that the luminance value rapidly changes. As a result, in the image compression device and method of the first embodiment, redundancy can be imparted while retaining the characteristics which are the recognition objects, and a compression efficiency of the image can be raised.

Next, a second embodiment will be described.

FIG. 5 schematically shows a constitution example of an image compression device 200 according to the second embodiment.

The image compression device 200 according to the second embodiment is a modification of the image compression device 100 of the first embodiment. As shown in FIG. 5, the image compression device 200 comprises: an image input section 201; a smoothing and difference processing section 202 as a smoothing processing section and a difference processing section; a coding section 203; a data output section 204 and the like.

It is to be noted that the image input section 201, the coding section 203, and the data output section 204 are similar to the image input section 101, the coding section 103, and the data output section 104 in the image compression device 100 of the first embodiment. Therefore, detailed description of the image input section 201, coding section 203, and data output section 204 will be omitted.

The smoothing and difference processing section 202 subjects an image supplied from the image input section 201 to smoothing processing, and processing of a difference between pixels. The smoothing and difference processing section 202 supplies the image as a processing result to the coding section 203. The smoothing processing by the smoothing and difference processing section 202 is smoothing processing depending on a magnitude of the difference between an intermediate value and a luminance value of a noted pixel in a median filter as described in the first embodiment.

Moreover, the processing of the difference between the pixels by the smoothing and difference processing section 202 is processing to calculate a difference value between adjacent pixels. The smoothing and difference processing section 202 combines and executes the smoothing processing and the processing of the difference between the pixels.

It is to be noted that the smoothing and difference processing section 202 functions as a conversion processing section for performing conversion processing with respect to the image which is input from the image input section 201 and which is regarded as an object of compression processing.

Next, the processing of the smoothing and difference processing section 202 will be described.

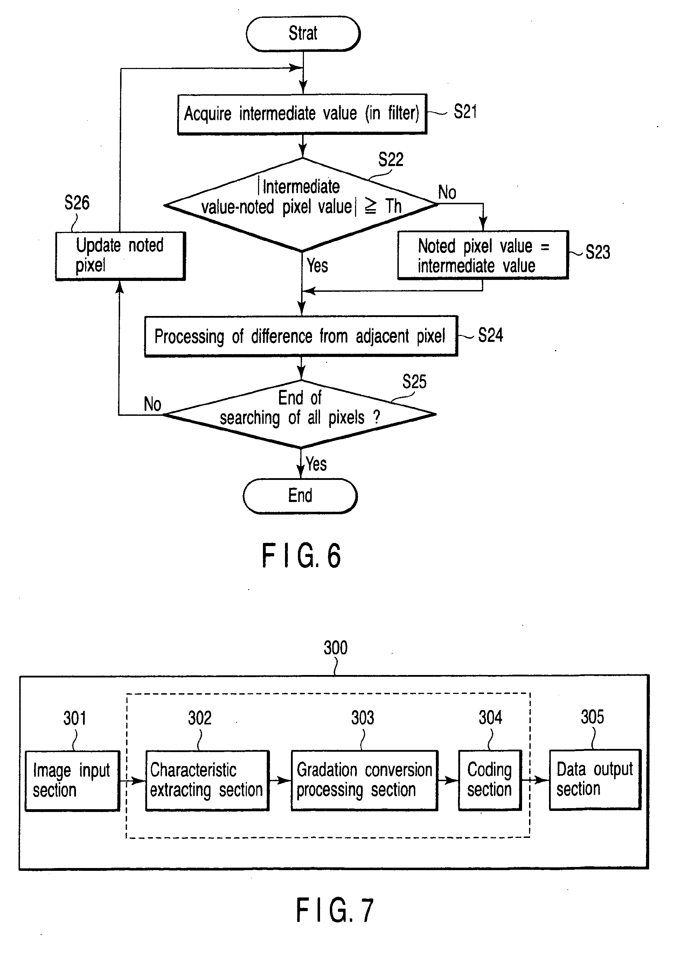

FIG. 6 is a flowchart showing a processing flow of the smoothing and difference processing section 202.

The smoothing and difference processing section 202 successively regards as the noted pixels the respective pixels in the image supplied from the image input section 201, and performs the processing described later.

When the image is supplied from the image input section 201, the smoothing and difference processing section 202 performs smoothing processing (steps S21 to S23). This smoothing processing is similar to the processing of the steps S11 to S13 described in the first embodiment. That is, the smoothing and difference processing section 202 applies the median filter as the smoothing processing with respect to the noted pixel in the image acquired from the image input section 201, and calculates the intermediate value in the median filter (step S21). For example, in the smoothing and difference processing section 202 having the median filter with respect to 3x3 pixels, the intermediate value is calculated with respect to the image constituted of 3x3 pixels.

On calculating the intermediate value, the smoothing and difference processing section 202 calculates the magnitude (difference value) of the difference between the intermediate value and the luminance value of the noted pixel. On calculating the difference value between the intermediate value and the luminance value of the noted pixel, the smoothing and difference processing section 202 judges whether or not the calculated difference value is not less than a preset threshold value (step S22).

When it is judged by this judgment that the difference value between the luminance value of the noted pixel and the intermediate value is not less than the preset threshold value (step S22, YES), the smoothing and difference processing section 202 leaves the luminance value of the noted pixel after smoothed as that of the noted pixel before smoothed.

Moreover, when it is judged by the judgment that the difference value between the luminance value of the noted pixel and the intermediate value is less than the preset threshold value (step S22, NO), the smoothing and difference processing section 202 replaces the luminance value of the noted pixel after smoothed with the intermediate value (step S23).

Next, the smoothing and difference processing section 202 performs processing to calculate the difference value between the adjacent pixels as the processing of the difference between the pixels (step S24). In the processing of the difference between the pixels, the section calculates the difference value between the luminance value of the noted pixel and that of the pixel adjacent to the noted pixel. For example, the processing of the difference between the pixels is calculated by the following equation 2.

$$\text{(Equation 2)} \quad f(x, y) = f(x, y) - f(x-1, y),$$

wherein f(x, y) denotes the luminance value of the noted pixel, and f(x-1, y) denotes the luminance value of the pixel adjacent to the noted pixel.

When the processing of the difference between the pixels ends, the smoothing and difference processing section 202 checks whether or not the processing has ended with respect to all of the pixels in the image acquired from the image input section 201 (step S25).

When it is judged by this check that the processing does not end with respect to all of the pixels, the smoothing and difference processing section 202 updates the noted pixel (step S26), and returns to the step S21. Accordingly, the smoothing and difference processing section 202 repeatedly performs processing similar to the above-described processing with respect to the next noted pixel.

Moreover, when it is judged by the above-described check that the processing with respect to all of the pixels has ended, the smoothing and difference processing section 202 ends the smoothing and the processing of the difference between the pixels with respect to the whole image (i.e., all of the pixels in the image) acquired from the image input section 201. The image subjected to the smoothing and the processing of the difference between the pixels in this manner is supplied to the coding section 203.

In the above-described smoothing processing and the processing of the difference between the pixels, the processing of the difference between the pixels can be performed with respect to the image while retaining characteristics which are recognition objects such as image information in which the luminance value rapidly changes. Therefore, even in a case where the image information in which the luminance value rapidly changes is the characteristic which is the recognition object, the smoothing and difference processing section 202 can perform the processing of the difference between the pixels with respect to the image of a compression object smoothed while retaining the characteristics which are the recognition objects.

As described above, in the image compression device of the second embodiment, the image of the compression object is subjected to smoothing processing to leave the luminance value of the noted pixel after smoothed as that of the noted pixel before smoothed in a case where the difference value between the intermediate luminance value and the luminance value of the noted pixel is not less than the predetermined threshold value, and to set the luminance value of the noted pixel after smoothed to the intermediate value in a case where the difference value between the intermediate luminance value and the luminance value of the noted pixel is less than the predetermined threshold value. Furthermore, the device performs the processing of the difference between the adjacent pixels in the smoothed image.

Consequently, in the image compression device and method of the second embodiment, the processing of the difference between the pixels can be performed with respect to the image smoothed while retaining the characteristics which are such recognition objects that the luminance value rapidly changes. As a result, in the image compression device and method of the second embodiment, redundancy can be imparted while retaining the characteristics which are the recognition objects, and a compression efficiency of the image can be raised.

Next, a third embodiment will be described.

This third embodiment will be described mainly assuming a case where a character image is a characteristic which is a recognition object in an image regarded as a compression object.

FIG. 7 schematically shows a constitution example of an image compression device 300 according to the third embodiment.

According to the third embodiment, as shown in FIG. 7, the image compression device 300 comprises: an image input section 301; a characteristic extracting section 302; a gradation conversion processing section 303; a coding section 304; a data output section 305 and the like.

It is to be noted that the image input section 301, the coding section 304, and the data output section 305 are similar to the image input section 101, the coding section 103, and the data output section 104 in the above-described first embodiment. Therefore, detailed description of the image input section 301, coding section 304, and data output section 305 will be omitted.

The characteristic extracting section 302 extracts characteristics as images which are recognition objects from the image supplied from the image input section 301. The characteristic extracting section 302 extracts the characteristics as the images of the recognition objects from a luminance value of each pixel constituting the image supplied from the image input section 301. The characteristic extracting section 302 outputs the extracted characteristics as the images of the recognition objects to the gradation conversion processing section 303.

For example, in a case where the image supplied from the image input section 301 is an image of a paper sheet which is an object of character recognition, a pixel group (character region) constituting a character and a pixel group (background region) constituting a background are obtained as the characteristics from the image. Especially in a case where the character having a certain luminance value is described on the paper sheet having a uniform luminance value, the image of the paper sheet comprises the pixel group having a luminance value of the paper sheet itself as the background, and the pixel group having the luminance value of the character itself as the character. In this case, in a distribution of the luminance values of the respective pixels in the image, the luminance value of each pixel constituting the background and that of each pixel constituting the character are two maximums.

The gradation conversion processing section 303 performs gradation conversion with respect to the image based on the characteristics of the image obtained by the characteristic extracting section 302. That is, the gradation conversion processing section 303 functions as a conversion processing section which performs conversion processing with respect to the image input from the image input section 301 and regarded as an object of compression processing. The gradation conversion processing section 303 performs such gradation conversion processing as to allocate a fixed value to each pixel of the image, for example, based on the characteristics of the image obtained by the characteristic extracting section 302. The gradation conversion processing section 303 outputs image data subjected to the gradation conversion processing to the coding section 304.

For example, in a case where the image supplied from the image input section 301 is the image of the paper sheet which is the object of the character recognition, a threshold value (Th1) indicating the pixel group (character region) constituting the character, and a threshold value (Th2) indicating the pixel group (background region) constituting the background are obtained as the characteristics from the characteristic extracting section 302. In this case, the gradation conversion processing section 303 subjects to the gradation conversion processing a whole image (all of the pixels in the image) supplied from the image input section 301 based on two threshold values (Th1, Th2) supplied from the characteristic extracting section 302.

Next, an example of characteristic extraction processing by the characteristic extracting section 302 will be described.

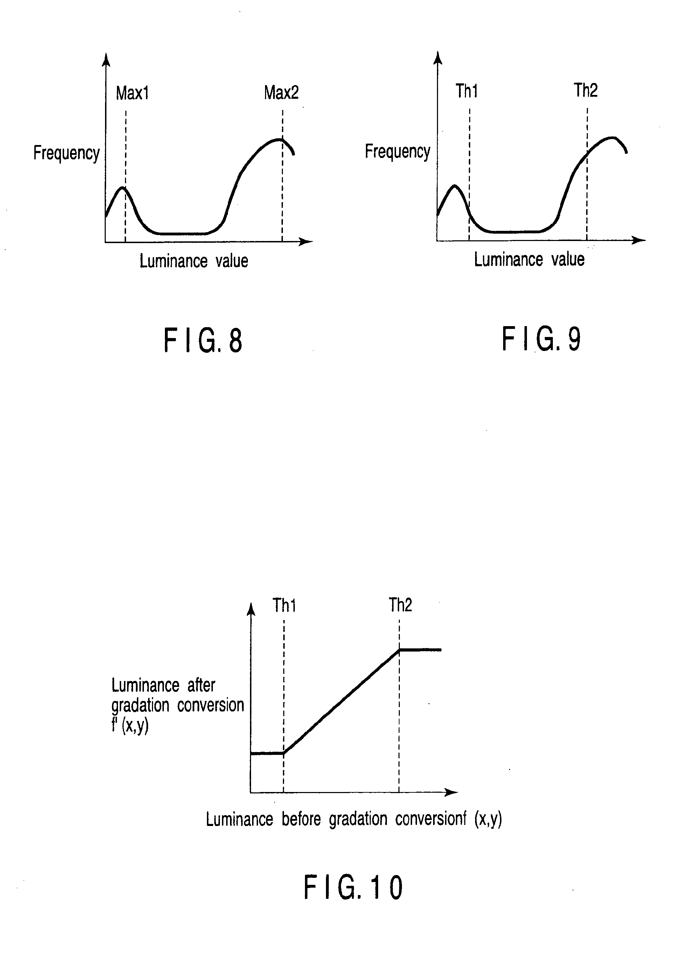

FIGS. 8 and 9 show histograms of the luminance values in a certain image. FIG. 8 shows two maximum values (Max1, Max2) in the histogram of the luminance values. FIG. 9 shows two threshold values (Th1, Th2) in the histogram of the luminance values.

That is, when the image is supplied from the image input section 301, the characteristic extracting section 302 prepares the histogram of the luminance values of the respective pixels in the image. In a case where the image supplied from the image input section 301 is the image of the paper sheet which is the object of the character recognition, the characteristic extracting section 302 prepares the histogram shown in FIG. 8. The histogram shown in FIG. 8 has two maximum values (Max1, Max2). One maximum value (Max1) indicates a peak of the character region in the image. The other maximum value (Max2) indicates a peak of the background region in the image.

Therefore, on preparing the histogram of the luminance values with respect to the image supplied from the image input section 301, the characteristic extracting section 302 extracts two maximum values from the prepared histogram. As described above, each pixel having the luminance value in the vicinity of the maximum value extracted from the histogram is the pixel of the character region or the pixel of the background region. In the example shown in FIG. 8, each pixel having the luminance value in the vicinity of one maximum value (Max1) indicates the pixel group of the character region in the image. Each pixel having the luminance value in the vicinity of the other maximum value (Max2) indicates the pixel group of the background region in the image.

Therefore, the characteristic extracting section 302 judges the threshold values as the character region and the background region based on the maximum values extracted from the histogram. As to these threshold values, a value distant from each maximum value by a predetermined value may be simply set as each threshold value (Th1, Th2), and a value corresponding to a certain accumulated value of the histogram may be set as each threshold value (Th1, Th2). On judging these threshold values, the characteristic extracting section 302 supplies the judged threshold values (Th1, Th2) as the values indicating the characteristics of the image to the gradation conversion processing section 303.

The gradation conversion processing section 303 performs gradation conversion processing to allocate the fixed value to each pixel of the image based on the threshold values (Th1, Th2) obtained from the characteristic extracting section 302. For example, in a case where the image supplied from the image input section 301 is the image of the paper sheet which is the object of the character recognition, the gradation conversion processing section 303 performs the gradation conversion processing represented by the following equation 3 based on the threshold values (Th1, Th2) supplied from the characteristic extracting section 302:

$$\text{(Equation 3)}$$
$$f'(x, y) = Th1 \text{ in a case where } f(x, y) \leq Th1; \text{ and}$$
$$f'(x, y) = Th2 \text{ in a case where } f(x, y) \geq Th2,$$

wherein $f(x,y)$ indicates the luminance value of the pixel in the image supplied from the image input section 301, Th1 and Th2 indicate two thresold values judged by the characteristic extracting section 302, and $f'(x, y)$ indicates the luminance value of the pixel converted by the gradation conversion processing section 303.

FIG. 10 is a diagram showing an example of the gradation conversion processing by the gradation conversion processing section 303.

As shown in FIG. 10, in the above-described gradation conversion processing, the pixel whose luminance value is smaller than the threshold value Th1 as the threshold value of the character region is converted into a predetermined luminance value as the luminance value of the pixel forming the character. The pixel whose luminance value is larger than the threshold value Th2 as the threshold value of the background region is converted into a predetermined luminance value as the luminance value of the pixel forming the background.

Therefore, in the gradation conversion processing by the gradation conversion processing section 303, redundancy can be imparted without losing the characteristics in the character region or the background region. As a result, in the image compression device 300, a compression efficiency of the image can be raised without influencing the processing such as character recognition with respect to the compressed image.

As described above, in the image compression device of the third embodiment, the characteristics which are objects of recognition processing are extracted from the acquired image, the image is subjected to the gradation conversion processing depending on the characteristics which are the objects of the recognition processing in the extracted image, and the image subjected to the gradation conversion processing is coded.

In the image compression device and method of the third embodiment, the compression efficiency of the image can be raised while retaining the characteristics which are the objects of the recognition processing in the image which is the object of the compression processing.

Next, a fourth embodiment will be described.

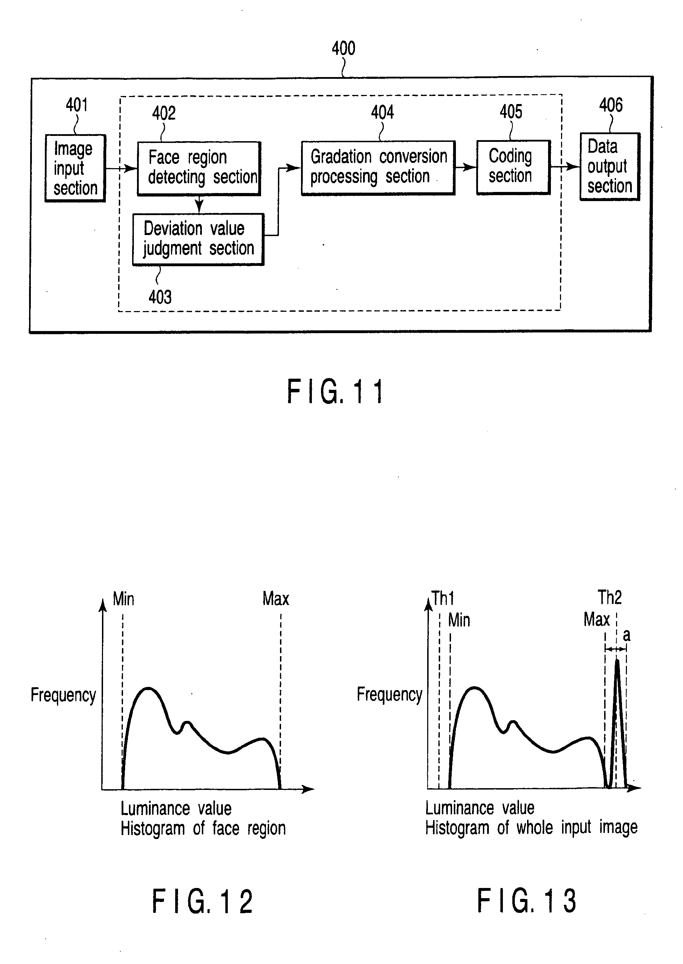

FIG. 11 schematically shows a constitution example of an image compression device 400 according to the fourth embodiment.

The image compression device 400 according to the fourth embodiment is a modification of the third embodiment. The fourth embodiment will be described mainly assuming a case where a characteristic which is a recognition object in an image regarded as a compression object is a face image.

As shown in FIG. 11, the image compression device 400 comprises an image input section 401, a face region detecting section 402, a deviation value judgment section 403, a gradation conversion processing section 404, a coding section 405, and a data output section 406.

It is to be noted that the image input section 401, the gradation conversion processing section 404, the coding section 405, and the data output section 406 are similar to the image input section 301, the gradation conversion processing section 303, the coding section 304, and the data output section 305 in the third embodiment. Therefore, detailed description of the image input section 401, gradation conversion processing section 404, coding section 405, and data output section 406 will be omitted.

The face region detecting section 402 performs processing to detect a face region of the face image from the image supplied from the image input section 401. The face region detecting section 402 supplies to the deviation value judgment section 403 information indicating the face region detected from the image supplied from the image input section 401.

It is to be noted that in the detection processing of the face region in the face region detecting section 402, for example, there can be applied a method described in a document (Kazuhiro FUKUI, Osamu YAMAGUCHI: "Face Characteristic Point Extraction by Combination of Shape Extraction and Pattern Collation", Papers of the Institute of Electronics, Information and Communication Engineers (D), vol. J80-D-H, No. 8, pp. 2170 to 2177 (1977)). In this document, there is described a method in which a correlation value is obtained while moving in an image a template prepared beforehand to thereby regard a place having the highest correlation value as the face region.

Moreover, in the detection processing of the face region in the face region detecting section 402, a method of extracting the face region may be used utilizing an inherent space method or a partial space method.

The deviation value judgment section 403 judges the deviation value as a threshold value for use in gradation conversion processing by the gradation conversion processing section 404. The deviation value judgment section 403 supplies the judged deviation value as the threshold value to the gradation conversion processing section 404. It is to be noted that the deviation value judgment section 403 functions as a characteristic extracting section which performs characteristic extraction processing to extract the deviation value (threshold value) as the characteristic of the recognition object in the image of the compression object input by the image input section 401.

For example, the deviation value judgment section 403 judges the deviation value based on the luminance value of each pixel forming the face region detected by the face region detecting section 402. The deviation value is judged based on a minimum value (Min) and a maximum value (Max) of the luminance values of the respective pixels forming the face region. That is, when the face region detecting section 402 detects the face region, the deviation value judgment section 403 detects the maximum and minimum values from the luminance values of the respective pixels forming the face region detected by the face region detecting section 402. On detecting the minimum value of the face region, the deviation value judgment section 403 regards a luminance value which is smaller than the detected minimum value by a predetermined value as a first threshold value (Th1) as a first deviation value. On detecting the maximum value of the face region, the deviation value judgment section 403 regards a luminance value which is larger than the detected maximum value by a predetermined value as a second threshold value (Th2) as a second deviation value.

It is to be noted that as to the maximum and minimum values detected by the deviation value judgment section 403, the maximum and minimum values may be statistically detected in a distribution of pixel values of the respective pixels forming the face region. That is, the deviation value judgment section 403 may detect the minimum and maximum values from the pixel values which are not less than a certain frequency in the distribution of the pixel values of the respective pixels forming the face region. In this case, the pixel value of the pixel which appears by an influence of noises or the like can be prevented from being detected as the minimum or maximum value.

The gradation conversion processing section 404 performs the gradation conversion processing with respect to the image based on the threshold value judged by the deviation value judgment section 403. As described above, the threshold value as the deviation value is judged based on the minimum and maximum values of the face region. Therefore, the gradation conversion processing section 404 can perform the gradation conversion processing while retaining the pixel value of each pixel forming the face region which is the recognition object.

In other words, a region other than the face region detected by the face region detecting section 402 is a region (background region) of a background image of the face image. That is, the pixel having a luminance value which is larger than the maximum value, or the pixel having a luminance value which is smaller than the minimum value is the pixel of the background region. When the image is subjected to the gradation conversion processing using the threshold value (Th1) based on the minimum value, the pixel whose luminance value is smaller than the threshold value (Th1) in the background region of the image is converted into a predetermined luminance value. Similarly, when the image is subjected to the gradation conversion processing using the threshold value (Th1) based on the minimum value, the pixel whose luminance value is larger than the threshold value (Th2) in the background region of the image is converted into the predetermined luminance value.

Therefore, in the image compression device 400, the gradation conversion processing can be performed even with respect to the image including the face image as the recognition object having a complicated distribution of the luminance values without influencing the face image as the recognition object. As a result, in the image compression device 400, redundancy is imparted, and a compression efficiency can be enhanced while retaining characteristics as recognition objects.

Next, an example of the deviation value by the deviation value judgment section 403 will be described.

FIG. 12 shows an example of a histogram showing the distribution of the luminance values of the respective pixels forming the face region. FIG. 13 shows an example of a histogram showing the distribution of the pixel values of the respective pixels forming a whole image including the face region of FIG. 12.

In the example of the histogram shown in FIG. 12, it is shown that the luminance values of the respective pixels forming the face region are values ranging from the minimum value (Min) to the maximum value (Max). On the other hand, in the example of the histogram of the whole image shown in FIG. 13, a distribution a appears in which the maximum is taken in the luminance values larger than the maximum value (Max) in addition to the distribution of the luminance values of the respective pixels forming the face region shown in FIG. 12. Each pixel forming the distribution a has a luminance value which is larger than the maximum value (Max). Therefore, each pixel forming the distribution a does not include any pixel that forms the face region. The distribution a in which the maximum is taken in the luminance values larger than the maximum value (Max) is supposed to be a distribution of the luminance values of the respective pixels forming the background region in the image. That is, the respective pixels forming the distribution a are the pixels of the background region totally unrelated to the face image which is the recognition object. Therefore, even when each pixel forming the distribution a is converted into a specific luminance value, any characteristic of the face image as the recognition object is not lost.

Moreover, the threshold value (Th1) shown in FIG. 13 is a value judged based on the minimum value (Min) shown in FIG. 12. In the example shown in FIG. 13, the threshold value (Th1) is a luminance value smaller than the minimum value (Min). The threshold value (Th2) shown in FIG. 13 is a value judged based on the maximum value (Max) shown in FIG. 12. In the example shown in FIG. 13, the threshold value (Th2) is a luminance value larger than the maximum value (Max).

Therefore, as to the image gradation-converted using the threshold values (Th1, Th2), the face image as the recognition object included in the image is retained. Moreover, the background region of the image is converted into a certain luminance value based on the threshold value. Therefore, the image of the background region can be provided with redundancy. As a result, in the image compression device 400 of the fourth embodiment, the image of the compression object can be subjected to the conversion processing which imparts the redundancy for raising the compression efficiency while retaining the luminance value of each pixel forming the face region as the recognition object.

As described above, in the image compression device of the fourth embodiment, the face region which is the object of the recognition processing is detected from the acquired image, the threshold value for the gradation conversion processing is judged based on the luminance value of each pixel forming the face region, the image is subjected to the gradation conversion processing by the threshold value, and the image subjected to the gradation conversion processing is coded.

In the image compression device and method of the fourth embodiment, the compression efficiency of the image can be raised while retaining the face image which is the object of the recognition processing in the image which is the object of the compression processing. Next, a fifth embodiment will be described.

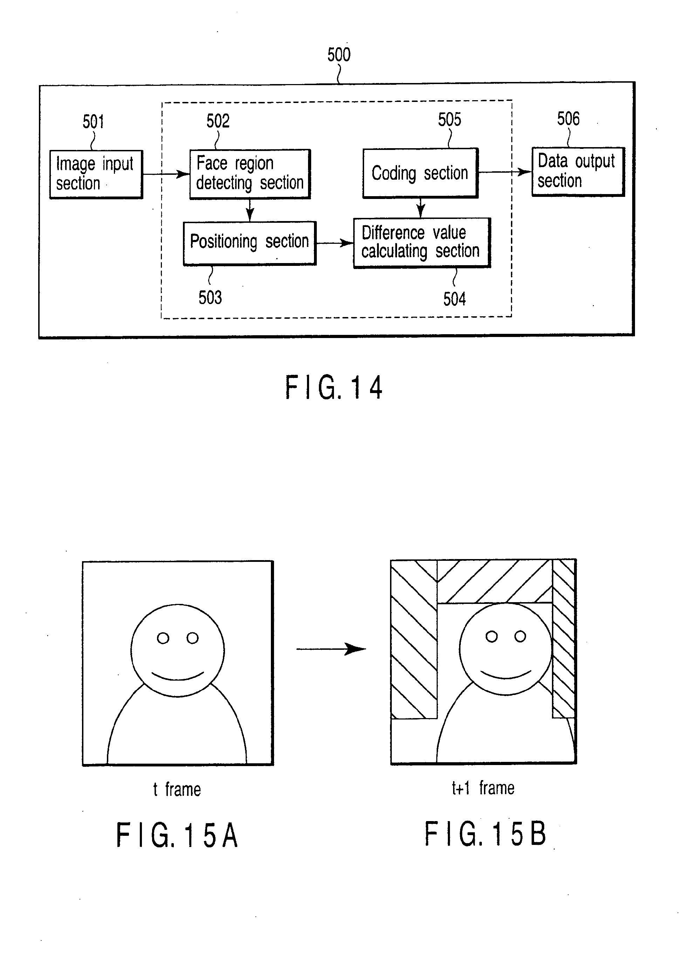

FIG. 14 schematically shows a constitution example of an image compression device 500 according to the fifth embodiment.

According to the fifth embodiment, as shown in FIG. 14, the image compression device 500 comprises an image input section 501, a face region detecting section 502, a positioning section 503, a difference value calculating section 504, a coding section 505, a data output section 506 and the like.

It is to be noted that the coding section 505 and the data output section 506 are similar to the coding section 103 and the data output section 104 in the first embodiment. Therefore, detailed description of the coding section 505 and data output section 506 will be omitted. Additionally, the coding section 505 performs coding processing with respect to a difference image supplied from the difference value calculating section 504.

The image input section 501 continuously inputs a plurality of images. The image input section 501 continuously inputs a plurality of images including characteristics which are objects of recognition processing. For example, the image input section 501 continuously inputs a plurality of images including a face image as the characteristic which is the object of the recognition processing. The image input section 501 comprises, for example, a television camera or the like. The image input section 501 successively supplies each of the continuously input images to the face region detecting section 502.

Moreover, it is assumed that the respective images continuously input by the image input section 501 are digital image data in which values (pixel values) of pixels forming each image are represented by digital values. For example, each of the images continuously input by the image input section 501 is digital image data including 512 pixels in a lateral direction and 512 pixels in a longitudinal direction. Here, description will be given assuming that each image continuously input by the image input section 501 is image data in which the pixel value of each pixel is represented by a luminance value. It is to be noted that each image continuously input by the image input section 501 may be image data in which the value (pixel value) of each pixel is represented by a density value.

The face region detecting section 502 performs processing to detect a region (face region) of the face image with respect to each image successively supplied from the image input section 501. It is to be noted that the face detection processing performed with respect to each image by the face region detecting section 502 is similar to that by the face region detecting section 402 in the fourth embodiment. Therefore, detailed description of the face region detecting section 502 will be omitted.

The positioning section 503 functions as a judgment processing section which judges characteristics of the image input by the image input section 501. The positioning section 503 judges the characteristics of the image input by the image input section 501, and selectively positions each image based on the judged characteristics of the image.

That is, the positioning section 503 judges whether or not to perform positioning of the image and the previous image based on the face region of each image detected by the face region detecting section 502.

When it is judged that the positioning is not performed, the positioning section 503 supplies the image as such to the difference value calculating section 504. When it is judged that the positioning is to be performed, the positioning section 503 matches the position of the face region in the image with that of the face region in the immediately previous image. In this case, the positioning section 503 supplies to the difference value calculating section 504 the image in which the face region is positioned depending on the position of the face region in the immediately previous image.

It is to be noted that the positioning section 503 can perform positioning as the positioning of the face region, for example, using a position of a gravity of the face region detected by the face region detecting section 502. In this case, the face region detecting section 502 supplies to the positioning section 503 the information indicating a gravity position of the face region together with the information indicating the face region.

The difference value calculating section 504 calculates an image (difference image) as the difference value between the previous and subsequent images continuously input by the image input section 501. That is, the difference value calculating section 504 calculates the difference image between each image and the immediately previous image.

The difference value calculating section 504 calculates the difference image constituted of a difference value between the respective pixels based on a correspondence of the respective pixels in the previous and subsequent images depending on the characteristics of the image judged by the positioning section 503. The difference value calculating section 504 calculates the difference image between the positioned image and the immediately previous image especially with respect to the image positioned by the positioning section 503. The difference value calculating section 504 supplies the calculated difference image to the coding section 505.

Moreover, for example, the difference value calculating section 504 calculates the luminance value of each pixel in the difference image by the following equation 5:

$$\text{(Equation 5)} \quad f_t{}'(x,\ y) = f_t(x,\ y) - f_{t+1}(x,\ y),$$

wherein $f_t{}'(x, y)$ denotes the value of each pixel in the difference image, $f_t(x, y)$ denotes the luminance value of each pixel in the immediately previous image, and $f_{t+1}(x, y)$ denotes the luminance value of each pixel in the image regarded as a processing object.

According to the equation 5, as to the pixels having the equal luminance value in the same position in the previous and subsequent images, the value of the pixel in the difference image is "0". When there are many pixels indicating "0" in the difference image, it is indicated that each pixel has high redundancy in the difference image, and a compression efficiency of the difference image is high. That is, the more the pixels having the equal value in the same position exist in the previous and subsequent images, the higher the redundancy is. The compression efficiency is raised.

Next, an example of the difference image obtained from two previous and subsequent images will be described.

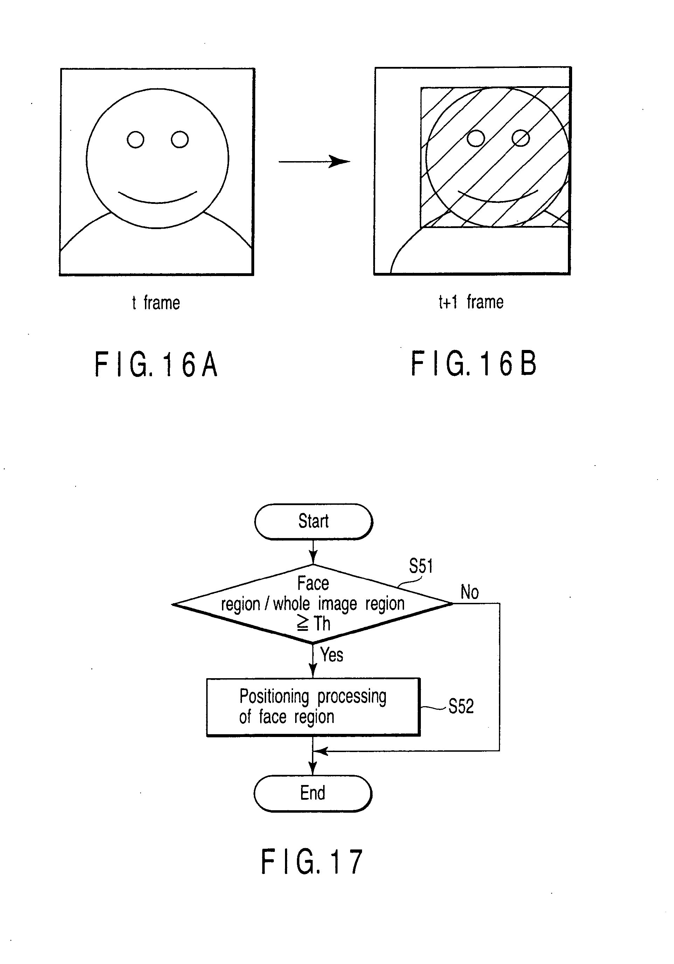

FIG. 15A shows an example of an image including the face image input by the image input section 501. FIG. 15B shows an example of an image next to the image shown in FIG. 15A input by the image input section 501. FIG. 16A shows an example of an image including the face image input by the image input section 501. FIG. 16B shows an example of an image next to the image shown in FIG. 16A input by the image input section 501.

In the images shown in FIGS. 15A and 15B, a size of the face region in the whole image is small. On the other hand, in the images shown in FIGS. 16A and 16B, the size of the face region in the whole image is large.

For example, there is assumed a case where a camera as the image input section 501 continuously photographs the image including the face image. In this case, when a photographing position of the camera as the image input section 501 is fixed, and photographing conditions are the same, a background is photographed as the same image in the same position in a plurality of images photographed by the camera.

Therefore, the larger the region of the background is in the image photographed by the camera, the more the pixels indicating "0" exist in the difference image. It is predicted that mainly the value of each pixel in the background region shown by slant lines in FIG. 15B easily indicates "0" in the difference image between the images shown in FIGS. 15A and 15B.

On the other hand, the larger the face region is in the image photographed by the camera, the smaller the background region relatively becomes. In this case, pixels obtained from the background region and indicating "0" are reduced in the difference image. It is also predicted that the background does not move, but a person moves. Therefore, in a case where the face region is large in the whole image as shown in FIGS. 16A and 16B, even when the difference image between the previous and subsequent images is simply calculated, there are supposedly less pixels indicating "0".

Therefore, the positioning section 503 matches the positions of the face regions in the previous and subsequent images in a case where the face region is large in the whole image. When the positions of the face regions in the previous and subsequent images are matched, there are supposedly more pixels indicating "0" in the face region in the difference image between the previous and subsequent images. For example, when the position of the face region in the image shown in FIG. 16A is matched with that of the face region in the image shown in FIG. 16B to calculate the difference image, it is predicted that the value of each pixel easily indicates "0" in the face region shown by slant lines in FIG. 16B.

Therefore, the positioning section 503 judges whether or not to position the face regions in the previous and subsequent images depending on whether or not the size of the face region in the whole image is not less than a predetermined size.

Next, the positioning processing by the positioning section 503 will be described.

FIG. 17 is a flowchart showing the positioning processing by the positioning section 503.

When the face region detecting section 502 detects the face region in the image supplied from the image input section 501, the positioning section 503 calculates the size of the face region as a ratio of the size of the face region occupying the whole image input by the image input section 501. It is to be noted that when the size of the whole image input by the image input section 501 is a fixed size, the size of the face region may be detected.

On calculating the ratio of the face region occupying the whole image, the positioning section 503 judges whether or not the ratio of the face region occupying the whole image is not less than the preset threshold value (Th) (step S51). It is to be noted that when the size of the face region itself is detected, the positioning section 503 may judge whether or not the size of the face region is not less than the preset size.

When it is judged by the judgment that ratio of the face region occupying the whole image is less than the threshold value (Th) (step S52, NO), the positioning section 503 ends the processing without performing the positioning processing of the face regions in the previous and subsequent images.

Moreover, when it is judged by the above-described judgment that the ratio of the face region occupying the whole image is not less than the threshold value (Th) (step S52, YES), the positioning section 503 performs positioning processing of the face regions in the previous and subsequent images (step S52). In the positioning processing, the position of the face region in the image regarded as the processing object is matched with that (e.g., gravity position of the face region) of the face region in the immediately previous image.

As described above, the positioning section 503 positions the face regions in the previous and subsequent images in a case where the size of the face region is not less than a predetermined threshold value, and does not position any image in a case where the size of the face region is less than the predetermined threshold value.

In the processing by the positioning section 503, mainly the face regions in the previous and subsequent images are regarded as object regions of the difference in a case where the size of the face region is not less than the predetermined threshold value. Mainly the background regions in the previous and subsequent images are regarded as the object regions of the difference in a case where the size of the face region is less than the predetermined threshold value. In other words, the positioning section 503 switches the region regarded as the object of the difference to the face region or the background region depending on the size of the face region.

According to the processing by the positioning section 503, the difference value calculating section 504 can calculate the difference image having a high compression efficiency irrespective of the characteristics of the image input by the image input section.

As described above, in the image compression device of the fifth embodiment, the face regions are detected from a plurality of continuously acquired images, respectively, the previous and subsequent images are positioned depending on the size of the detected face region, the difference image is calculated from the positioned previous and subsequent images, and the calculated difference image is coded.

In the image compression device and method of the fifth embodiment, the redundancy in the difference image, is improved, and the compression efficiency of the image can be raised based on the characteristics of the respective continuous images.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1. An image compression method of compressing an image, **characterized by** comprising:

   performing image input processing (101, 201, 301, 401, 501) to input the image having characteristics which are recognition objects;
   performing conversion processing (102, 202, 303; 404, 504) to convert a pixel value of each pixel forming the image while retaining the characteristics which are the recognition objects in the image input by the image input processing; and

performing coding processing (103, 203, 304, 405, 505) with respect to the image converted by the conversion processing.

2. The image compression method according to claim 1, **characterized in that** the conversion processing is smoothing processing to smooth the image while retaining the characteristics which are the recognition objects in the input image.

3. The image compression method according to claim 2, **characterized in that** the smoothing processing retains the pixel value of the pixel in a case where a magnitude of a difference between an intermediate value of the pixel value of each pixel forming the image and the pixel value of the pixel in an image region corresponding to a predetermined filter is not less than a predetermined threshold value, and replaces the pixel with the intermediate value in a case where the magnitude of the difference between the intermediate value and the pixel value of the pixel is less than the predetermined threshold value.

4. The image compression method according to claim 2, **characterized in that** the conversion processing comprises the smoothing processing; and difference processing between the pixels to calculate a difference value between adjacent pixels with respect to the image smoothed by the smoothing processing, and the coding processing performs coding processing with respect to an image obtained by subjecting the smoothed image to the difference processing between the pixels.

5. The image compression method according to claim 1, **characterized by** further comprising:

performing characteristic extraction processing (302, 403) to extract the characteristics as the recognition objects in the input image,
wherein the conversion processing is gradation conversion processing to perform gradation conversion in the image based on the characteristics as the recognition objects extracted from the input image

6. The image compression method according to claim 5, **characterized in that** the characteristic extraction processing extracts a threshold value indicating the characteristic which is the recognition object in the input image, and the gradation conversion processing performs the gradation conversion with respect to the image based on the threshold value extracted by the characteristic extraction processing.

7. The image compression method according to claim 6, **characterized in that** the characteristic extraction processing extracts the threshold value based on a distribution of the pixel values of the respective pixels forming the input image.

8. The image compression method according to claim 7, **characterized in that** the characteristic extraction processing extracts the threshold value based on the pixel value indicating a maximum value in the distribution of the pixel values of the respective pixels forming the input image.

9. The image compression method according to claim 5, **characterized by** further comprising:

performing face region detection processing (402) to detect a region of a face image which is the recognition object from the input image,
wherein the characteristic extraction processing extracts a threshold value to retain the region of the face image based on the pixel value of each pixel forming the region of the face image detected by the face region detection processing, and
the gradation conversion processing performs the gradation conversion with respect to the image based on the threshold value extracted by the characteristic extraction processing.

10. The image compression method according to claim 9, **characterized in that** the characteristic extraction processing extracts the threshold value based on the pixel value indicating a maximum or minimum value in a distribution of the pixel values of the respective pixels forming the region of the face image.

11. The image compression method according to claim 1, **characterized by** further comprising:

performing face region detection processing (502) to detect a face region from the input image; and
performing judgment processing (503) to judge the characteristics of the image based on a size of the face region detected by the face region detection processing,
wherein the image input processing continuously inputs a plurality of images including face images,
the conversion processing is difference value calculation processing to calculate a difference image constituted of a difference value between the respective pixels based on a correspondence of the respective pixels in previous and subsequent images depending on the characteristics judged by the judgment processing, and the coding processing performs coding processing with respect to the difference image calculated by the difference value calculation processing.

12. The image compression method according to claim 11, **characterized in that** the judgment processing judges whether or not to position the previous and subsequent images based on positions of the face regions depending on the size of the face region detected by the face region detection processing, and
the difference value calculation processing calculates a difference image constituted of the difference value between the respective pixels in the previous and subsequent images, which is a correspondence in a state in which the positions of the face regions are matched in a case where the judgment processing judges that the positioning is to be performed based on the positions of the face regions.

13. An image compression device (100, 200, 300, 400, 500) which compresses an image, **characterized by** comprising:

an image input section (101, 201, 301, 401, 501) which inputs an image having characteristics which are recognition objects;
a conversion processing section (102, 202, 303, 404, 504) which converts a pixel value of each pixel forming the image while retaining the characteristics which are the recognition objects in the image input by the image input section (101, 201, 301, 401, 501); and
a coding section (103, 203, 304, 405, 505) which performs coding processing with respect to the image converted by the conversion processing section (102, 202, 303, 404, 504).

14. The image compression device (100) according to claim 13, **characterized in that** the conversion processing section (102) is a smoothing processing section (102) which smoothes the image while retaining the characteristics which are the recognition objects in the image input by the image input section (101).

15. The image compression device (100) according to claim 14, **characterized in that** with regard to each pixel forming the image, the smoothing processing section (102) retains the pixel value of the pixel in a case where a magnitude of a difference between an intermediate value of the pixel value of each pixel and the pixel value of the pixel in an image region corresponding to a predetermined filter is not less than a predetermined threshold value, and the smoothing processing section replaces the pixel with the intermediate value in a case where the magnitude of the difference between the intermediate value and the pixel value of the pixel is less than the predetermined threshold value.

16. The image compression device (200) according to claim 14, **characterized in that** the conversion processing section (202) performs the smoothing processing, and difference processing between the pixels to calculate a difference value between adjacent pixels with respect to the image smoothed by the smoothing processing, and the coding section (203) performs coding processing with respect to an image obtained by subjecting the image smoothed by the conversion processing section (202) to the difference processing between the pixels.

17. The image compression device (300, 400) according to claim 13, **characterized by** further comprising:

a characteristic extracting section (302, 403) which extracts the characteristics as the recognition objects in the image input by the image input section (301, 401),
wherein the conversion processing section (303, 404) is a gradation conversion processing section (303, 404) which performs gradation conversion in the image based on the characteristics as the recognition objects extracted from the image input by the image input section (301, 401) by the characteristic extracting section (302, 403).

18. The image compression device (300, 400) according to claim 17, **characterized in that** the characteristic extracting section (302, 403) extracts a threshold value indicating the characteristic which is the recognition object in the image input by the image input section (301, 401), and
the gradation conversion processing section (303, 404) performs the gradation conversion with respect to the image based on the threshold value extracted by the characteristic extracting section (302, 403).

**19.** The image compression device (300) according to claim 18, **characterized in that** the characteristic extracting section (302) extracts the threshold value based on a distribution of the pixel values of the respective pixels forming the image input by the image input section (301).

**20.** The image compression device (300) according to claim 19, **characterized in that** the characteristic extracting section (302) extracts the threshold value based on the pixel value indicating a maximum value in the distribution of the pixel values of the respective pixels forming the image input by the image input section (301).

**21.** The image compression device (400) according to claim 17, **characterized by** further comprising:

a face region detecting section (402) which detects a region of a face image which is the recognition object from the image input by the image input section (401),

wherein the characteristic extracting section (403) extracts a threshold value to retain the region of the face image based on the pixel value of each pixel forming the region of the face image detected by the face region detecting section (402), and

the gradation conversion processing section (404) performs the gradation conversion with respect to the image based on the threshold value extracted by the characteristic extracting section (402).

**22.** The image compression device (400) according to claim 21, **characterized in that** the characteristic extracting section (403) extracts the threshold value based on the pixel value indicating a maximum or minimum value in a distribution of the pixel values of the respective pixels forming the region of the face image detected by the face region detecting section (402).

**23.** The image compression device (500) according to claim 13, **characterized by** further comprising:

a face region detecting section (502) which detects a face region from the image input by the image input section (501); and

a judgment processing section (503) which judges the characteristics of the image based on a size of the face region detected by the face region detecting section (502),

wherein the image input section (501) continuously inputs a plurality of images including face images,

the conversion processing section (504) is a difference value calculating section (504) which calculates a difference image constituted of a difference value between the respective pixels based on a correspondence of the respective pixels in previous and subsequent images depending on the characteristics judged by the judgment processing section (503), and

the coding section (505) performs coding processing with respect to the difference image calculated by the difference value calculating section (504).

**24.** The image compression device (500) according to claim 23, **characterized in that** the judgment processing section (503) judges whether or not to position the previous and subsequent images based on positions of the face regions depending on the size of the face region detected by the face region detecting section (502), and

the difference value calculating section (504) calculates a difference image constituted of the difference value between the respective pixels in the previous and subsequent images, which is the correspondence in a state in which the positions of the face regions are matched in a case where the judgment processing section (503) judges that the positioning is to be performed based on the positions of the face regions.

100

| 101 | 102 | 103 | 104 |
|---|---|---|---|
| Image input section | Smoothing processing section | Coding section | Data output section |

FIG. 1

121 → 122 → 123

| | | |
|---|---|---|
| 0 | 0 | 0 |
| 256 | 256 | 256 |
| 0 | 0 | 0 |

| | | |
|---|---|---|
| 0 | 0 | 0 |
| 256 | 0 | 256 |
| 0 | 0 | 0 |

FIG. 2

131 → 132 → 133

| | | |
|---|---|---|
| 0 | 0 | 0 |
| 256 | 256 | 256 |
| 0 | 0 | 0 |

| | | |
|---|---|---|
| 0 | 0 | 0 |
| 256 | 256 | 256 |
| 0 | 0 | 0 |

FIG. 3

```
        ┌──────────────┐
        │    Start     │
        └──────┬───────┘
               │
               ▼
    ┌───────────────────────────────┐
    │ Acquire intermediate value    │──S1
    │         (in filter)           │
    └──────────────┬────────────────┘
                   │
                   ▼        S2
              ◇─────────────◇
         │ Intermediate        │      No    ┌──────────────────┐
         │ value-noted pixel   │──────────▶ │ Noted pixel value=│──S3
         │ value | ≧ Th        │            │ intermediate value│
              ◇─────────────◇              └─────────┬────────┘
                   │ Yes                              │
                   ▼                                  │
        ┌──────────────┐ ◀────────────────────────────┘
        │     End      │
        └──────────────┘
```

FIG. 4

200

```
┌─────────────────────────────────────────────────────────────────────────┐
│    201           ┌ ─ ─ 202 ─ ─ ─ ─ ─ ─ ─ ─ 203 ─ ─ ─ ┐    204            │
│ ┌──────────┐     │ ┌─────────────────────┐ ┌─────────┐ │ ┌─────────────┐  │
│ │Image input│───▶│ │Smoothing and difference│─▶│Coding   │ │─▶│Data output  │  │
│ │section   │    │  │processing section   │ │section  │ │  │section      │  │
│ └──────────┘     │ └─────────────────────┘ └─────────┘ │ └─────────────┘  │
│                  └ ─ ─ ─ ─ ─ ─ ─ ─ ─ ─ ─ ─ ─ ─ ─ ─ ─ ─┘                   │
└─────────────────────────────────────────────────────────────────────────┘
```

FIG. 5

Strat

Acquire intermediate value (in filter) — S21

S22
|Intermediate value-noted pixel value| ≧ Th

No

S26
Update noted pixel

Yes

Noted pixel value = intermediate value — S23

Processing of difference from adjacent pixel — S24

S25
End of searching of all pixels ?

No

Yes

End

## FIG. 6

300

| 301 Image input section | 302 Characteristic extracting section | 303 Gradation conversion processing section | 304 Coding section | 305 Data output section |

## FIG. 7

Frequency

Max1    Max2

Luminance value

FIG. 8

Frequency

Th1    Th2

Luminance value

FIG. 9

Th1    Th2

Luminance after gradation conversion f' (x,y)

Luminance before gradation conversionf (x,y)

FIG. 10

FIG. 11

Luminance value
Histogram of face region

FIG. 12

Luminance value
Histogram of whole input image

FIG. 13

FIG. 14

t frame

FIG. 15A

t+1 frame

FIG. 15B

t frame

# FIG. 16A

t+1 frame

# FIG. 16B

Start

S51

Face
region / whole image region
$\geqq$ Th

No

Yes

Positioning processing
of face region

S52

End

# FIG. 17